# FASCICULE DE BREVET EUROPEEN

(11) **EP 1 568 965 B1**
(45) Date de publication et mention de la délivrance du brevet: **01.04.2009**
(21) Numéro de dépôt: 05300084.0
(22) Date de dépôt: 02.02.2005
(51) Int. Cl.: G01C 15/02, G01B 11/30, B25H 7/04

(54) **Dispositif d'implantation par marquage au pointeau de références prédéterminées sur une paroi d'une face de cuve de stockage**
Vorrichtung zum Setzen von vorbestimmten Referenzpunkten auf eine Wand eines Lagerungstanks mit einem Körner.
Device for implanting predetermined reference marks on a wall of a storage tank by marking with a pin.

(30) Priorité: 27.02.2004 FR 0450374
(43) Date de publication de la demande: 31.08.2005
(73) Titulaire: AKER YARDS S.A., 44600 Saint Nazaire (FR)
(72) Inventeur: Guellec, Jean-Pierre, Corsept, 44560 (FR)
(74) Mandataire: Le Faou, Daniel

(56) Documents cités:
- EP-B- 0 466 800
- DE-U1- 20 021 000
- FR-A- 2 255 548
- PATENT ABSTRACTS OF JAPAN vol. 1996, no. 06, 28 juin 1996 (1996-06-28) & JP 08 043099 A (TOSHIBA ENG & CONSTR CO LTD), 16 février 1996 (1996-02-16)
- DATABASE WPI Section EI, Week 9414 Derwent Publications Ltd., London, GB; Class S02, AN 1994-116784 XP002300168 ANDREEV A YU: & SU 1 795 282 A (NIKOLAEVSK SECT SHIPBUILD ENG INST) 15 février 1993 (1993-02-15)

## Description

L'invention se rapporte à un outil de positionnement de pointeau, à un dispositif d'implantation de références par marquage du pointeau et à l'application de ce dispositif au marquage au pointeau, sur la paroi d'une face sensiblement plane d'une cuve de stockage, de références prédéterminées dans un référentiel à deux dimensions en vue de préparer des moyens d'installation pour des panneaux d'isolation thermique de la cuve destinés à être collés sur la paroi. Classiquement, le dispositif comprend un outil de positionnement de pointeau qui comporte un support pouvant être déplacé et immobilisé sur la paroi, et comprend en outre un ensemble émetteur-récepteur optique agencé pour permettre un contrôle de la position dudit outil par rapport à l'une quelconque des références prédéterminées.

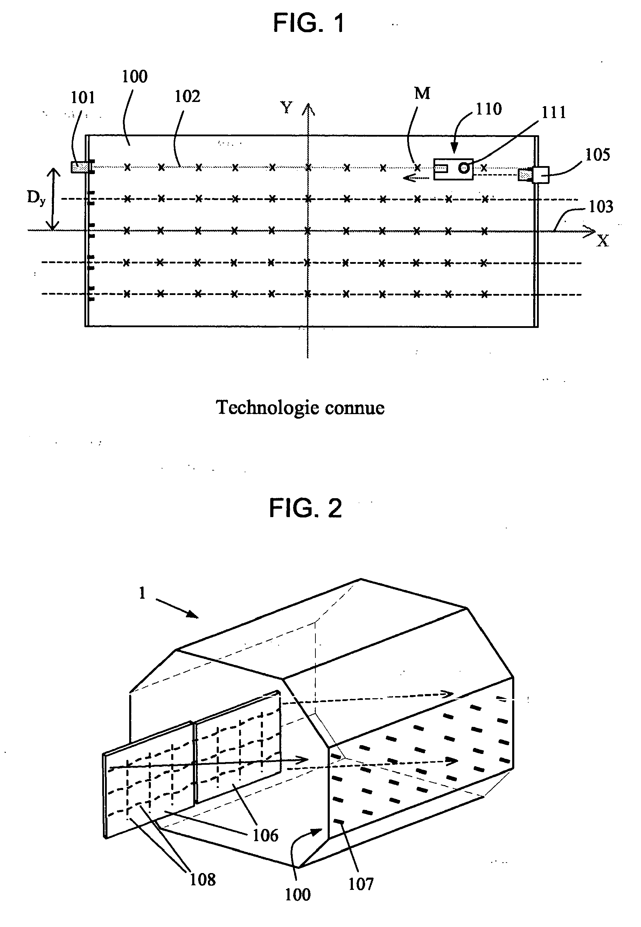

Dans ce qui suit, on appelle implantation d'une référence l'opération consistant à marquer au pointeau une paroi métallique en un point qui matérialise cette référence prédéterminée dans un référentiel à deux dimensions. On pourra aussi parler d'implantation d'un point pour désigner cette opération. Dans l'état de la technique, l'ensemble émetteur-récepteur optique d'un tel dispositif d'implantation comporte classiquement un système émetteur laser installé en bordure de la paroi sensiblement plane d'une face de cuve à implanter. Un tel dispositif classique est représenté schématiquement sur la figure 1. Le système émetteur laser 101 balaye un rayon laser 102 sur quelques degrés dans un plan perpendiculaire à la paroi 100, de façon à défmir sur la paroi une ligne qui reste parallèle à une ligne de référence donnée 103. Cette ligne de référence est prévue sensiblement horizontale lorsque la paroi concernée par l'implantation est disposée verticalement. La distance Dy entre la ligne de référence 103 et la ligne dessinée par le balayage du rayon laser 102 sur la paroi est alors ajustée en réglant la hauteur de la fixation de l'émetteur laser 101 sur la paroi, ce qui permet l'implantation d'un ensemble de points M dont les références correspondent à la même ordonnée prédéterminée dans un repère ayant un axe Y perpendiculaire à la ligne de référence.

Le système émetteur laser 101 peut ensuite être calé à intervalles réguliers selon différentes hauteurs correspondant aux différentes ordonnées des points M à implanter. Ces points M sont marqués par des croix sur la figure 1 pour représenter un quadrillage d'implantation pouvant être réalisé sur une paroi rectangulaire d'une cuve de stockage, mais il faut comprendre que les points ne sont matérialisés et numérotés sur la paroi qu'une fois l'implantation réalisée. L'outil 110 de positionnement du pointeau est déplacé sur la paroi par un opérateur circulant généralement sur un échafaudage. Cet opérateur s'assure de la position en ordonnée d'un guide de pointeau 111, l'ajustement étant effectué en alignant avec le rayon laser 102 un repère prévu à cet effet sur l'outil.

La position du pointeau en abscisse est déterminée par un appareil distancemètre 105 qui est muni d'un système émetteur-récepteur optique visant une zone de réflexion sur l'outil 110, un système de traitement du signal optique de retour étant prévu sur l'appareil afm de permettre la mesure de la distance entre l'émetteur-récepteur et l'outil. Ce distancemètre 105 est fixé sur la paroi 100 sensiblement à la même ordonnée que l'outil 110, et donne ainsi indirectement l'abscisse du pointeau selon l'axe X qui coïncide avec la ligne 103 de référence horizontale. Un réglage fin du guide de pointeau sur l'outil de positionnement permet de déplacer ce guide 111 le long de la ligne horizontale balayée par le rayon laser 102 jusqu 'à ce que la mesure donnée par le distancemètre corresponde à l'abscisse prédéterminée d'un point à implanter sur la paroi. Une fois l'implantation de ce point effectuée par un coup de pointeau, l'outil de positionnement du pointeau est déplacé à l'horizontale sur la zone du point suivant à marquer, par exemple vers la référence M dans la direction de la flèche en pointillés. Cette opération est renouvelée jusqu'à ce que tous les points d'une même ordonnée soient implantés. L'émetteur laser 101 et le distancemètre 105 sont ensuite repositionnés à une autre ordonnée prédéterminée, pour effectuer de la même façon l'implantation de tous les points prédéfinis à cette ordonnée.

Après avoir effectué sur la paroi l'implantation de toutes les références de positionnement prédéterminées dans un référentiel à deux dimensions, il est nécessaire de procéder à une opération de mesure du niveau de la paroi à l'endroit de chaque pointage par rapport à une surface parfaitement plane sensiblement parallèle à la paroi, afm de permettre d'établir par calcul une cartographie des défauts de planéité de la paroi. En effet, l'invention et l'état de la technique décrits dans la présente s'appliquent en particulier à un dispositif d'implantation de références de positionnement de goujons sur des parois internes de cuves de stockage de gaz liquéfié. Une telle cuve de stockage est représentée sur la figure 2, une face intérieure de cette cuve 1 étant prête à recevoir des panneaux d'isolation cryogénique 106. Les goujons 107, situés dans la cuve, servent à maintenir en position les panneaux 106 qui doivent être fixées à la paroi 100 par collage grâce à des cordons de résine 108 répartis préalablement sur les faces des panneaux en vis à vis de la paroi 100. Le maintien en position des panneaux est nécessaire pour assurer une fixation provisoire afm de laisser à la résine le temps de durcir et d'assurer la fixation définitive. Des perçages sont prévus sur les faces des panneaux pour coïncider avec les positions des goujons et permettre un positionnement précis des panneaux lors de leur fixation sur la paroi. Les panneaux ne sont préparés au collage qu'après que toutes les faces de la cuve aient été implantées et que les goujons aient été installés aux points d'implantation.

Les parois sensiblement planes d'une cuve de stockage ont typiquement des longueurs de plusieurs dizaines de mètres, et il est un fait que les tolérances de fabrication d'une telle cuve autorisent des défauts de planéité des faces qui sont supérieurs aux défauts autorisés pour les panneaux d'isolation cryogénique. De plus, il faut savoir que les défauts de planéité d'une paroi métallique d'une cuve peuvent évoluer pendant la durée du processus de préparation des moyens d'installation des panneaux d'isolation, notamment avec les contraintes mécaniques et les variations de température que peut subir la cuve. Il s'ensuit que lors de la mise en place des cordons de résine sur une face d'un panneau, il est nécessaire de moduler localement l'épaisseur des cordons en fonction des défauts de planéités de la paroi de la cuve sur les zones de collage qui seront en contact avec les cordons et d'insérer des cales de différentes épaisseurs au niveau des goujons de manière à pallier les défaut de planéité de la paroi à ces localisations prédéterminées. En effet, si les défauts de planéité de la paroi n'était pas annulés, les panneaux ne seraient pas tous sensiblement dans un même plan admissible selon les spécifications techniques de construction et l'ensemble des panneaux collés ne formerait pas une surface sensiblement plane admissible.

Dans l'état de la technique décrit précédemment, la mesure du niveau de la paroi à l'endroit de chaque pointage est réalisée par rapport à une surface plane repérable grâce au balayage d'un rayon laser dont l'émetteur est fixé à la paroi, le balayage étant réglé sensiblement parallèle à la paroi. Dans le dispositif de la figure 1, le balayage peut être réalisé par l'émetteur laser 101 pivoté de 90° autour de son axe longitudinal, en augmentant l'amplitude angulaire du balayage de façon à couvrir les zones implantées. Après avoir implanté tous les points sur la paroi, un opérateur doit se repositionner sur chaque point qui a été matérialisé par un coup de pointeau, avec un appareil permettant de mesurer la distance entre ce point et la surface plane balayée par le laser. Pour chacune des références implantées, dont les coordonnées étaient prédéterminées dans un repère d'axes X et Y, une coordonnée supplémentaire est mesurée et enregistrée. Chacune des références est ainsi complétée par une coordonnée supplémentaire de profondeur dans un repère orthogonal à trois dimensions, ce qui permet ensuite de procéder à un calcul de lissage à partir de toutes les références pour établir une cartographie des défauts de planéité de la paroi.

Dans cet état de la technique, la mesure des défauts de planéités d'une paroi nécessite ainsi une seconde intervention sur la paroi de la part d'au moins un opérateur, suite à la première opération d'implantation des références sur la paroi. Deux appareillages différents doivent être successivement utilisés pour ces deux opérations, et la réalisation de l'ensemble des opérations de mesure de planéité pour toutes les faces de la cuve prend beaucoup de temps. En outre, la mesure n'offre généralement pas une bonne précision, et la cartographie des défauts de planéité de la paroi peut comporter des incertitudes préjudiciables à une détermination fiable des épaisseurs locales des cordons de résine pour le collage des panneaux d'isolation d'une paroi. Enfm, le contrôle de l'évolution des défauts de planéité est relativement difficile à réaliser sur une courte période typiquement de quelques heures, par exemple pendant la durée du processus de préparation des moyens d'installation des panneaux d'isolation. Il y a donc le risque de ne pas obtenir un collage satisfaisant à cause d'une erreur sur le calcul de l'épaisseur locale à prévoir pour un cordon de résine, faute d'avoir pu repérer pendant le processus de préparation une éventuelle évolution significative d'un défaut de planéité.

Par ailleurs, le document DE-U-200 21 200 décrit un outil selon le préambule de la revendication 1.

L'invention a pour but de remédier à ces inconvénients, et de permettre de réaliser en une même opération l'implantation des références sur une paroi et la mesure de la planéité de cette paroi, tout en améliorant notablement la précision ainsi que les possibilités de correction dans le temps de la mesure par rapport aux méthodes classiques de mesure de planéité.

A cet effet, l'invention a pour objet un outil de positionnement de pointeau suivant la revendication 1. Les revendications 2 à 8 concernent des modes de réalisation de cet outil. Les revendications 9 à 12 concernent un dispositif d'implantation de références par marquage au pointeau, comportant l'outil. Les revendications 13 à 15 concernent une application de ce dispositif.

Par tachéomètre, on entend couramment un appareil de mesure qui combine un théodolite et un distancemètre, c'est à dire un dispositif de mesure d'angles horizontaux et verticaux qui permet aussi de mesurer la distance entre un ensemble émetteur-récepteur optique du dispositif et un réflecteur visé par l'émetteur. Dans un tachéomètre électronique, l'émetteur optique produit un train d'ondes électromagnétiques, pas nécessairement dans la gamme des longueurs d'ondes visibles, et le récepteur optique analyse l'écho renvoyé par le réflecteur. L'onde émise est appelée onde porteuse, et fait généralement l'objet d'une modulation. Le procédé de mesure de la distance consiste alors à comparer la phase de modulation de l'onde reçue à celle de l'onde émise après le trajet aller-retour. Les réflecteurs les plus souvent utilisés sont des coins de cube, ou des prismes rhomboédriques.

De préférence, le tachéomètre électronique utilisé dans un dispositif d'implantation de références selon l'invention permet la localisation automatique du réflecteur ciblé, la cible étant alors définie comme passive. On pourra par exemple choisir un tachéomètre permettant la localisation d'un prisme par un processus en deux étapes consistant en une acquisition grossière suivie d'un pointé précis. Pour la méthode de pointé précis, on pourra préférer un tachéomètre équipé de capteurs CCD (Charged Coupled Device) qui fournissent une image numérique de l'intensité du signal retour émis à l'origine par une diode laser. Il n'est toutefois pas exclu d'utiliser une cible dite active, c'est à dire de prévoir sur l'outil de positionnement de pointeau un système actif qui émet vers le tachéomètre afin de permettre une localisation au moins grossière du réflecteur de l'outil.

Dans un mode préféré de réalisation d'un dispositif d'implantation de références selon l'invention, la station du tachéomètre est matérialisée par une base fixée sur la paroi, et le tachéomètre est muni d'un système autonome d'enregistrement des coordonnées d'implantation. Par station d'un tachéomètre, on entend couramment un point d'un terrain ou d'une surface où est disposé le tachéomètre pour effectuer des mesures. Dans le dispositif selon l'invention, il est avantageux de prévoir le tachéomètre monté amovible sur une base fixée sur la paroi par exemple par soudage. Ainsi, il n'est pas nécessaire de laisser le tachéomètre en station si les mesures doivent être interrompues pour une certaine durée. Lorsque les mesures sont reprises, par exemple après la nuit, le tachéomètre peut être rapidement remis en station. Pendant une période d'interruption, les données sur les coordonnées d'implantation acquises dans le système autonome d'enregistrement peuvent être transférées vers une unité centrale chargée du calcul de lissage pour établir une cartographie des défauts de planéité de la paroi. Ce transfert de données peut aussi être effectué seulement lors d'un changement de station du tachéomètre.

Avantageusement, un dispositif d'implantation de références selon l'invention comprend au moins un réflecteur optique supplémentaire apte à être monté sur un support, ce support étant agencé pour pouvoir être positionné sur la paroi en au moins un point de calage afin de contrôler une éventuelle évolution dans le temps de la position du point de calage mesurée par le tachéomètre. Ainsi, le contrôle de l'évolution des défauts de planéité ne présente pas de difficulté excessive même sur une courte période typiquement de quelques heures. Un unique réflecteur optique supplémentaire peut être utilisé pour des mesures dites de recalage de la station à partir de plusieurs points de calage. Le support du réflecteur est alors prévu pour être positionné successivement en plusieurs points de calage sur la paroi. Il n'est pas nécessaire de prévoir des moyens de fixation du support à la paroi. Le support peut en effet être maintenu par un opérateur sur un point de calage donné, le temps qu'un autre opérateur installé à la commande du tachéomètre procède à la mesure des coordonnées de ce point, et la mesure peut être poursuivie de la sorte sur les autres points de calage qui entourent une zone d'implantation sur la paroi.

Avantageusement, le réflecteur optique et le guide de pointeau sont solidairement déplaçables par rapport au support annexe, leur déplacement commun étant agencé pour qu'au moment de réaliser le marquage au pointeau, le guide de pointeau soit positionné à l'emplacement préalable du réflecteur. Ceci permet de s'assurer que le coup de pointeau pour l'implantation d'une référence prédéterminée est bien effectué à l'endroit précis où le réflecteur de l'outil a été positionné fmement de sorte que la mesure du tachéomètre coïncide avec cette référence, à une marge d'erreur près. De préférence, le réflecteur et le guide de pointeau sont montés sur un bloc déplaçable en translation le long d'une glissière ménagée sur le support annexe

L'invention, ses caractéristiques et ses avantages sont précisés dans la description qui suit en rapport avec les figures ci dessous.

Les figures 1 et 2, commentées précédemment, représentent schématiquement respectivement un dispositif classique d'implantation de références par marquage au pointeau et une cuve de stockage dont une face est prête à recevoir des panneaux d'isolation cryogénique.

La figure 3 représente schématiquement un dispositif d'implantation de références selon l'invention, muni d'un réflecteur optique supplémentaire pouvant être positionné successivement en plusieurs points de calage sur la paroi.

La figure 4 représente très schématiquement l'outil de positionnement de pointeau du dispositif d'implantation de la figure 3.

La figure 5 est une vue détaillée en perspective d'un outil de positionnement de pointeau pour un dispositif d'implantation selon l'invention.

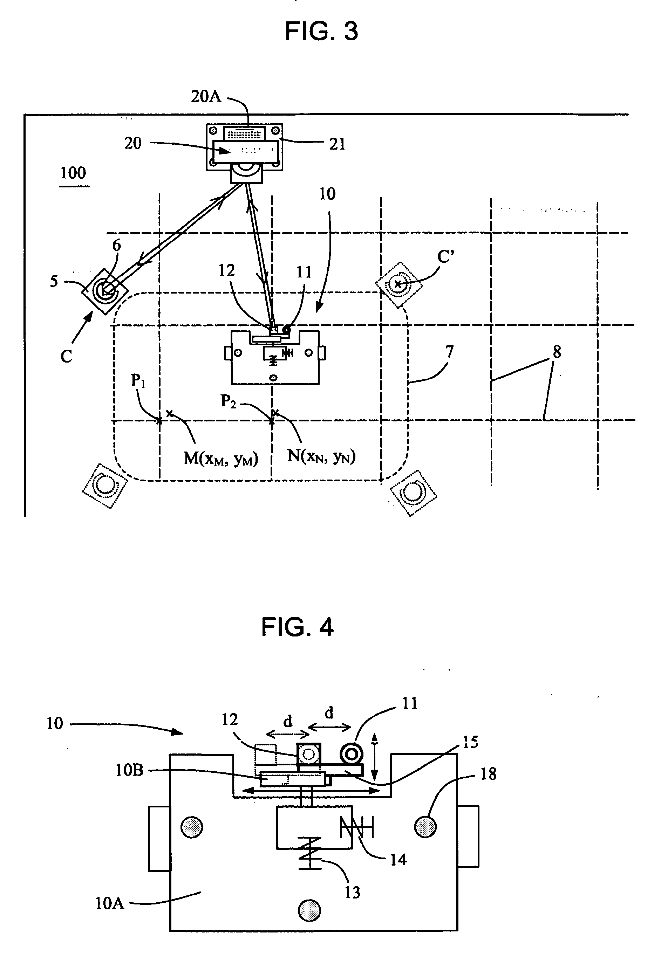

Le dispositif d'implantation de références représenté schématiquement sur la figure 3 comprend:
- un tachéomètre électronique 20 muni d'un système autonome 20A d'enregistrement des coordonnées d'implantation de références prédéterminées, monté sur une base 21 fixée sur la paroi 100 d'une cuve de stockage telle que visible sur la figure 2 ;
- un outil 10 de positionnement de pointeau pouvant être déplacé et immobilisé sur la paroi 100, muni d'un réflecteur optique 12 permettant de réfléchir un faisceau incident provenant du tachéomètre afin que ce dernier puisse déterminer les coordonnées d'implantation de chaque référence dans un référentiel à trois dimensions, et muni en outre d'un guide de pointeau 11 sous la forme d'un cylindre creux ;
- un réflecteur optique supplémentaire 6 monté sur un support 5 prévu pour être positionné successivement en plusieurs points de calage qui entourent une zone d'implantation 7, dessinée ici en pointillés, sur la paroi.

Les références prédéterminées dans un référentiel à deux dimensions, telles que par exemple les références M et N de la zone d'implantation 7, sont enregistrées dans un fichier du système autonome 20A. Dans la mise en oeuvre du dispositif d'implantation selon l'invention, les références sont généralement programmées de façon à ce qu'elles forment un quadrillage dans le plan de la paroi. En effet, les perçages des faces des panneaux d'isolation en vis à vis de la paroi, destinés à accueillir les goujons lors de la fixation des panneaux, sont généralement réalisés selon un quadrillage. Pour préparer l'implantation des références telles que M et N sur la paroi 100, un tracé préliminaire 8 formant un quadrillage est réalisé sur la paroi au décamètre et au cordeau afin de marquer de façon approximative les positions des références à implanter, avec une incertitude qui peut être relativement large, par exemple de ± 5 mm. Les intersections des lignes du tracé préliminaire, telles que marquées par les points P₁ et P₂, définissent ainsi les positions approximatives des références à implanter. Du fait de la relative imprécision du tracé 8, les positions exactes des références M et N à implanter sont en fait relativement écartées des points correspondants P₁ et P₂ qui ont été marqués grâce au tracé préliminaire.

Avantageusement, le réflecteur optique 12 de l'outil 10 est monté avec le guide de pointeau 11 sur un support annexe 10B visible sur la figure 4, ce support annexe étant déplaçable en assurant un positionnement fin par rapport au support principal 10A de l'outil grâce à des vis 13 et 14 de réglage fin. Ainsi, pour implanter une référence telle que M ou N sur la figure 3, l'outil 10 est déplacé par un opérateur de façon à positionner le réflecteur 12 sensiblement au dessus du point marqué correspondant tel que P₁ ou P₂. Une mesure au tachéomètre 20 de la position du réflecteur 12 est alors réalisée, et les deux coordonnées mesurées dans le référentiel du plan de la paroi sont comparées aux deux coordonnées telles que (x_{M}, y_{M}) ou (x_{N}, y_{N}) pré-enregistrées dans le système autonome 20A. Le dispositif d'implantation de références décrit dans la présente est prévu pour être mis en oeuvre par deux opérateurs: l'opérateur du tachéomètre indique à l'opérateur de l'outil 10 l'écart mesuré par rapport à la référence à implanter, et la direction vers laquelle déplacer le réflecteur 12 pour rendre cet écart inférieur à une tolérance donnée, selon chacune des deux directions du référentiel.

Le support principal 10A de l'outil 10 étant fermement immobilisé sur la paroi 100, par exemple grâce à des aimants permanents 18, l'opérateur utilise alors le réglage de positionnement fin du support annexe 10B pour rapprocher le réflecteur 12 de la position de la référence à implanter, jusqu'à ce que la mesure au tachéomètre de la position du réflecteur aboutisse à un écart inférieur à la tolérance donnée. La précision de la mesure au tachéomètre est telle qu'il est possible de fixer une valeur absolue de tolérance de l'ordre de 0,5 mm selon chacune des deux directions du référentiel. De plus, la précision de la mesure au tachéomètre dans une troisième direction perpendiculaire à la paroi est de l'ordre de ± 0,2 mm. La précision d'implantation des références est ainsi notablement améliorée par rapport à l'état de la technique mentionné précédemment et pour lequel la meilleure précision obtenue est de l'ordre de ± 1 mm dans chaque direction du référentiel.

Une fois l'écart inférieur à la tolérance donnée, le support annexe 10B de l'outil 10 est fermement immobilisé sur le support principal 10A, par exemple par des vis de blocage. Avantageusement, le réflecteur optique 12 et le guide de pointeau 11 sont montés sur un bloc 15 déplaçable en translation par rapport au support annexe 10B. Les centres respectifs du réflecteur 12 et du guide 11 étant espacés d'une certaine distance d, on peut voir sur le schéma de la figure 4 que la distance de translation du bloc 15 est prévue égale à cette distance d. De cette façon, après la translation, le guide de pointeau 11 est positionné exactement à l'emplacement préalable du réflecteur 12, comme représenté en pointillés. Le bloc 15 est ensuite fermement immobilisé par rapport au support annexe 10B, ce qui permet à l'opérateur de l'outil 10 d'insérer un pointeau dans le guide 11 et de donner un coup de pointeau sur la paroi à l'endroit exact du point à implanter, à la valeur de tolérance près. La même opération peut être répétée pour tous les points marqués sur le quadrillage de la paroi. La station du tachéomètre pourra être déplacée selon les zones de la paroi à implanter, afin de permettre une visée correcte du réflecteur 12 de l'outil 10 sur toutes les références de la zone.

Afin de contrôler dans le temps l'évolution des défauts de planéité d'une zone d'implantation 7 telle que délimitée par les pointillés sur la figure 3, un réflecteur optique supplémentaire 6 peut être utilisé pour des mesures dites de recalage de la station à partir de plusieurs points de calage tels que C et C'. Un tel réflecteur supplémentaire 6 peut être structurellement identique au réflecteur 12 de l'outil 10. Le support 5 du réflecteur 6 est prévu ici pour être positionné successivement en plusieurs points de calage qui entourent une zone d'implantation sur la paroi, par exemple en quatre points comme représenté autour de la zone 7. En pratique, un point de calage est préférablement marqué au pointeau, et un support 5 est muni en son centre d'une aiguille permettant à un opérateur de sentir le positionnement exact du support sur un creux de marquage au pointeau. La mesure des coordonnées d'un point de calage tel que C ou C' est effectuée par les deux opérateurs, et les coordonnées dans un référentiel à trois dimensions sont enregistrées dans le système autonome 20A du tachéomètre électronique 20. L'ensemble des coordonnées des points de calage d'une zone est utilisé pour le calcul d'un profil de surface moyenné pour la zone. Les mesures des coordonnées des points de calage sont généralement répétées à différentes périodes qui précèdent l'installation des panneaux. Si ces coordonnées ont évolué dans le temps, les coordonnées des références telles que M et N implantées dans la zone sont toutes corrigées en fonction de l'évolution du profil de surface moyenné pour la zone.

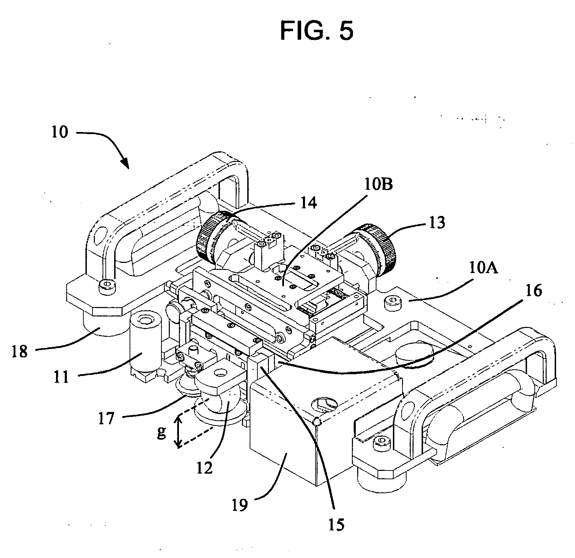

Sur la figure 5, un outil 10 de positionnement de pointeau pour un dispositif d'implantation selon l'invention est vu en perspective détaillée. Une fois l'outil 10 immobilisé sur la paroi grâce aux aimants permanents 18, le bloc 15 est en léger appui contre la paroi par l'intermédiaire d'un roulement à billes 17 afm de maintenir un espacement constant g entre la position du réflecteur optique ou prisme 12 et la surface de la paroi. Ainsi, la troisième coordonnée à déterminer pour une référence implantée, c'est à dire la coordonnée dans la direction perpendiculaire à la paroi, est toujours égale à la coordonnée mesurée par le tachéomètre pour le prisme 12 corrigée du décalage constant g. Ceci permet de s'affranchir d'un défaut local de planéité de la paroi entre les positions des aimants de l'outil.

Dans ce mode de réalisation, le bloc 15 qui porte le guide de pointeau 11 avec le prisme 12 et le roulement à billes 17, est déplaçable en translation le long d'une glissière 16 ménagée sur le support annexe 10B de l'outil 10. Un boîtier semi-ouvert 19 est prévu pour cacher le prisme après la translation du bloc 15, et pour éviter ainsi d'endommager accidentellement le prisme lors du marquage par le coup de pointeau.

Sur la figure 5, l'outil 10 représenté constitue une cible passive pour le tachéomètre avec lequel il coopère. Toutefois, un outil de positionnement de pointeau pour un dispositif d'implantation selon l'invention peut aussi être conçu comme un système actif qui échange des informations avec le tachéomètre, par exemple par des ondes radiofréquences. Ainsi, il est envisageable que l'outil soit équipé d'un système de visualisation des mesures du tachéomètre, ainsi que de commandes pour l'enregistrement de données par le tachéomètre. Un seul opérateur pourrait alors effectuer l'implantation de références sur une paroi, puisque c'est surtout lors d'un changement de station ou d'un recalage de la station qu'il serait nécessaire d'intervenir sur le tachéomètre.

## Revendications

1. Outil de positionnement de pointeau sur une paroi, comportant un support principal (10A) sur lequel est monté un réflecteur optique (12) agencé pour coopérer avec un tachéomètre électronique (20) pour permettre un contrôle de la position de l'outil,
**caractérisé en ce que**
le support principal (10A) comporte des aimants permanents (18) pour l'immobiliser sur la paroi,
l'outil comporte un guide (11) permettant l'insertion d'un pointeau pour donner un coup de pointeau sur la paroi afin d'y implanter une référence,
le guide (11) de pointeau étant monté avec le réflecteur optique (12) sur un support annexe (10B) déplaçable en assurant un positionnement fin par rapport au support principal (10A) grâce à des vis (13, 14) de réglage fin
et le réflecteur optique (12) étant agencé pour coopérer avec le tachéomètre électronique (20) afin de déterminer les coordonnées d'implantation de chaque référence dans un référentiel à trois dimensions.

2. Outil de positionnement de pointeau suivant la revendication 1, **caractérisé en ce que** le réflecteur optique (12) et le guide (11) de pointeau sont solidairement déplaçables par rapport audit support annexe (10B), leur déplacement commun étant agencé pour qu'au moment de réaliser le marquage au pointeau, le guide (11) de pointeau soit positionné à l'emplacement préalable du réflecteur.

3. Outil de positionnement de pointeau suivant l'une quelconque des revendications précédentes, **caractérisé en ce que** le réflecteur optique (12) et le guide (11) de pointeau sont montés sur un bloc (15) déplaçable en translation par rapport au support annexe (10B).

4. Outil de positionnement de pointeau suivant l'une quelconque des revendications précédentes, **caractérisé en ce que** le réflecteur optique (12) et le guide (11) de pointeau sont montés sur un bloc (15) déplaçable en translation le long d'une glissière (16) ménagée sur le support annexe (10B).

5. Outil de positionnement de pointeau suivant l'une quelconque des revendications 3 et 4, **caractérisé en ce que** ledit bloc (15) est apte à appuyer contre ladite paroi (100) par l'intermédiaire d'un roulement à billes (17) afin de maintenir un espacement constant (g) entre la position du réflecteur optique (12) et la surface de la paroi.

6. Outil de positionnement de pointeau suivant l'une quelconque des revendications 3 à 5, **caractérisé en ce que** le réflecteur (12) est un prisme, un boîtier semi-ouvert (19) est prévu pour cacher le prisme après la translation du bloc (15).

7. Outil de positionnement de pointeau suivant l'une quelconque des revendications précédentes, **caractérisé en ce que** le guide (11) de pointeau est sous la forme d'un cylindre creux.

8. Outil de positionnement de pointeau suivant l'une quelconque des revendications précédentes, **caractérisé en ce que** des vis de blocage sont prévues pour immobiliser le support annexe (10B) sur le support principal (10A).

9. Dispositif d'implantation par marquage au pointeau sur une paroi (100) d'une face sensiblement plane d'une cuve de stockage (1), de références prédéterminées (M, N) dans un référentiel à deux dimensions en vue de préparer des moyens d'installation (107, 108) pour des panneaux (106) d'isolation thermique de la cuve destinés à être collés sur la paroi, comprenant un outil (10) de positionnement de pointeau pouvant être déplacé et immobilisé sur la paroi, l'outil de positionnement de pointeau étant suivant l'une quelconque des revendications précédentes, comprenant en outre un ensemble émetteur-récepteur optique agencé pour permettre un contrôle de la position dudit outil (10) par rapport à l'une quelconque desdites références prédéterminées, ledit ensemble émetteur-récepteur optique étant un tachéomètre électronique (20).

10. Dispositif d'implantation par marquage au pointeau suivant la revendication 9, **caractérisé en ce que** la station dudit tachéomètre (20) est matérialisée par une base (21) fixée sur ladite paroi (100), ledit tachéomètre étant muni d'un système autonome (20A) d'enregistrement desdites coordonnées d'implantation (xM, yM, zM).

11. Dispositif d'implantation suivant l'une quelconque des revendications 9 et 10, **caractérisé en ce qu'**il comprend au moins un réflecteur optique supplémentaire (6) apte à être monté sur un support (5), ledit support étant agencé pour pouvoir être positionné sur ladite paroi (100) en au moins un point de calage (C) afin de contrôler une éventuelle évolution dans le temps de la position (xC, yC, zC) dudit point de calage mesurée par le tachéomètre.

12. Dispositif d'implantation selon la revendication 11, **caractérisé en ce qu'**il comprend un unique réflecteur optique supplémentaire (6) dont le support (5) est agencé pour être positionné successivement en plusieurs points de calage sur ladite paroi.

13. Application du dispositif d'implantation suivant l'une quelconque des revendications 9 à 12 au marquage au pointeau sur une paroi (100) d'une face sensiblement plane d'une cuve de stockage (1), de références prédéterminées (M, N) dans un référentiel à deux dimensions en vue de préparer des moyens d'installation (107, 108) pour des panneaux (106) d'isolation thermique de la cuve destinés à être collés sur la paroi.

14. Application suivant la revendication 13, **caractérisée en ce que**
l'outil (10) est déplacé par un opérateur de façon à positionner le réflecteur (12) de l'outil sensiblement au-dessus d'un point marqué (P1, P2) au préalable et définissant une position approximative de référence à implanter,
le support principal (10A) de l'outil (10) étant fermement immobilisé sur la paroi (100), l'opérateur utilise le réglage de positionnement fin du support annexe (10B) par rapport au support principal (10A) pour rapprocher le réflecteur (12) de l'outil de la position de la référence à implanter, jusqu'à ce que la mesure au tachéomètre de la position du réflecteur (12) de l'outil aboutisse à un écart inférieur à une tolérance donnée,
une fois l'écart inférieur à la tolérance donnée, le support annexe (10B) de l'outil (10) est fermement immobilisé sur le support principal (10A).

15. Application suivant la revendication 14, **caractérisée en ce que** le réflecteur optique (12) et le guide (11) de pointeau étant montés sur un bloc (15) déplaçable en translation par rapport au support annexe (10B),
après la translation du bloc (15) par rapport au support annexe (10B) immobilisé sur le support principal (10A), le guide (11) de pointeau est positionné exactement à l'emplacement préalable du réflecteur (12) de l'outil,
le bloc (15) est ensuite fermement immobilisé par rapport au support annexe (10B), ce qui permet à l'opérateur de l'outil (10) d'insérer un pointeau dans le guide (11) et de donner un coup de pointeau sur la paroi à l'endroit exact de la référence à implanter, à une valeur de tolérance près.

## Claims

1. A tool for positioning a punch on a wall, comprising a main support (10A) on which a light reflector (12) is mounted, which is arranged to cooperate with an electronic tacheometer (20) to enable the position of the tool to be checked,
**characterized in that**
the main support (10A) comprises permanent magnets (18) for holding it stationary on the wall,
the tool comprises a guide (11) enabling the insertion of a punch to strike the punch against the wall in order to set out a reference,
the punch guide (11) is mounted together with the light reflector (12) on an auxiliary support (10B), said auxiliary support (10B) being movable so as to be positioned accurately relative to said main support (10A) by means of fine adjustment screws (13, 14),
the light reflector (12) being arranged to cooperate with the electronic tacheometer (20) to determine the setting-out coordinates of each reference in a three-dimensional frame of reference.

2. Punch-positioning tool according to claim 1, **characterized in that** the light reflector (12) and the punch guide (11) are movable together relative to said auxiliary support (10B), their common displacement being arranged so that when the punch is used for marking purposes, the punch guide (11) is positioned at the previous location of the reflector.

3. Punch-positioning tool according to claim 1 or 2, **characterized in that** the light reflector (12) and the punch guide (11) are mounted on a block (15) that is movable in translation relative to the auxiliary support (10B).

4. Punch-positioning tool according to any one of the preceding claims, **characterized in that** the light reflector (12) and the punch guide (11) are mounted on a block (15) that is movable in translation along a slideway (16) arranged on the auxiliary support (10B).

5. Punch-positioning tool according to any one of claims 3 and 4, **characterized in that** said block (15) is suitable for bearing against said wall (100) via a ball bearing (17) in order to maintain a constant spacing (g) between the position of the light reflector (12) and the surface of the wall.

6. Punch-positioning tool according to any one of claims 3 to 5, **characterized in that** the reflector (12) is a prism, a half-open box (19) is provided to hide the prism after the block (15) has been moved in translation.

7. Punch-positioning tool according to any one of the preceding claims, **characterized in that** the punch guide (11) is in the form of a hollow cylinder.

8. Punch-positioning tool according to any one the preceding claims, **characterized in that** lock screws are provided to secure the auxiliary support (10B) relative to the main support (10A).

9. A device for setting out predetermined references (M, N) in a two-dimensional frame of reference by using a punch to mark a wall (100) of a substantially plane face of a storage tank (1) for the purpose of preparing installation means (107, 108) for installing panels (106) for thermally insulating the tank, which panels are to be stuck to the wall, the device comprising a punch-positioning tool capable of being moved over and held stationary on the wall, the punch-positioning tool being according to any one of the preceding claims, the punch-positioning tool further comprising a light emitter-receiver assembly arranged to enable the position of said tool (10) to be checked relative to any one of said predetermined references, said light emitter-receiver assembly being an electronic tacheometer (20).

10. A device according to claim 9, **characterized in that** the station of said tacheometer (20) is embodied in the form of a base (21) fixed to said wall (100), said tacheometer being provided with an autonomous system (20A) for recording said setting-out coordinates (xM, yM, zM).

11. A device according to any one of claims 9 and 10, **characterized in that** it comprises at least one additional light reflector (6) suitable for being mounted on a support (5), said support being arranged to be capable of being positioned on said wall (100) at at least one leveling point (C) so as to monitor any possible variation over time in the position (xC, yC, zC) of said leveling point as measured by the tacheometer.

12. A device according to claim 11, **characterized in that** it comprises a single additional light reflector (6) whose support (5) is arranged to be positioned successively in a plurality of leveling points on said wall.

13. Application of a device according to any one of claims 9 to 12 to the punch marking of predetermined references (M, N) in a two-dimensional frame on a wall (100) of a substantially plane face of a storage tank (1) for the purpose of preparing installation means (107, 108) for installing panels (106) for thermally insulating the tank, which panels are to be stuck to the wall.

14. Application according to claim 13, **characterized in that**
the tool (10) is moved by an operator so as to position the reflector (12) of the tool substantially over a previously marked point (P1, P2), said previously marked point (P1, P2) defining an approximate position of the reference to be set out,
the main support (10A) of the tool (10) being held firmly stationary on the wall (100), the operator uses the fine positioning of the auxiliary support (10B) relative to the main support (10A) so as to bring the tool reflector (12) towards the position of the reference to be set out, until the tacheometer measurement of the tool reflector position leads to a difference that is less than a given tolerance,
once the difference is less than the given tolerance, the auxiliary support (10B) of the tool (10) is firmly secured to the main support (10A).

15. Application according to claim 14, **characterized in that** the light reflector (12) and the punch guide (11) being mounted on a block (15) that is movable in translation relative to the auxiliary support (10B),
after the translation of the block (15) relative to the auxiliary support (10B) firmly secured to the main support (10A), the punch guide (11) is positioned exactly at the previous location of the reflector (12) of the tool,
the block (15) is then firmly secured relative to the auxiliary support (10B), thus enabling the operator of the tool (10) to insert the punch into the guide (11) and to strike the punch against the wall at the exact location of the reference to be set out, to within a tolerance.

## Patentansprüche

1. Werkzeug zur Positionierung eines Körners auf einer Wand, umfassend einen Hauptträger (10A), auf dem ein optischer Reflektor (12) montiert ist, der ausgelegt ist, um mit einem elektronischen Tachymeter (20) zusammenzuwirken, um eine Steuerung der Position des Werkzeugs zu erlauben,
**dadurch gekennzeichnet, dass**
der Hauptträger (10A) Permanentmagneten (18) umfasst, um ihn auf der Wand unbeweglich zu machen,
das Werkzeug eine Führung (11) umfasst, welche die Einführung eines Körners erlaubt, um den Körner auf die Wand zu stoßen, um dort einen Referenzpunkt zu setzen,
wobei die Körnerführung (11) mit dem optischen Reflektor (12) auf einem angefügten verstellbaren Träger (10B) montiert ist, indem sie eine Feinpositionierung bezüglich des Hauptträgers (10A) dank Feineinstellungsschrauben (13, 14) gewährleistet,
und wobei der optische Reflektor (12) ausgelegt ist, um mit dem elektronischen Tachymeter (20) zusammenzuwirken, um die Setzkoordinaten jedes Referenzpunkts in einem dreidimensionalen Bezugssystem zu bestimmen.

2. Werkzeug zur Positionierung eines Körners gemäß Anspruch 1, **dadurch gekennzeichnet, dass** der optische Reflektor (12) und die Körnerführung (11) bezüglich des angefügten Trägers (10B) zusammenhaltend verstellbar sind, wobei ihre gemeinsame Verstellung ausgelegt ist, damit im Moment des Durchführens der Markierung mit dem Körner, die Körnerführung (11) an der vorherigen Stelle des Reflektors positioniert wird.

3. Werkzeug zur Positionierung eines Körners gemäß einem der vorherigen Ansprüche, **dadurch gekennzeichnet, dass** der optische Reflektor (12) und die Körnerführung (11) auf einem in Verschiebung bezüglich des angefügten Trägers (10B) verstellbaren Block (15) montiert sind.

4. Werkzeug zur Positionierung eines Körners gemäß einem der vorherigen Ansprüche, **dadurch gekennzeichnet, dass** der optische Reflektor (12) und die Körnerführung (11) auf einem Block (15) montiert sind, der in Verschiebung entlang einer auf dem angefügten Träger (10B) eingerichteten Gleitschiene (16) verstellbar ist.

5. Werkzeug zur Positionierung eines Körners gemäß einem der vorherigen Ansprüche 3 und 4, **dadurch gekennzeichnet, dass** der Block (15) geeignet ist, mit einem Kugellager (17) dazwischen gegen die Wand (100) zu drücken, um einen konstanten Zwischenraum (g) zwischen der Position des optischen Reflektors (12) und der Fläche der Wand aufrecht zu halten.

6. Werkzeug zur Positionierung eines Körners gemäß einem der Ansprüche 3 bis 5, **dadurch gekennzeichnet, dass** der Reflektor (12) ein Prisma ist, und ein halboffener Behälter (19) vorgesehen ist, um den Prisma nach der Verschiebung des Blocks (15) zu verstecken.

7. Werkzeug zur Positionierung eines Körners gemäß einem der vorhergehenden Ansprüche, **dadurch gekennzeichnet, dass** die Körnerführung (11) in Form eines hohlen Zylinders ist.

8. Werkzeug zur Positionierung eines Körners gemäß einem der vorhergehenden Ansprüche, **dadurch gekennzeichnet, dass** Blockierungsschrauben vorgesehen sind, um den angefügten Träger (10B) auf dem Hauptträger (10A) unbeweglich zu machen.

9. Vorrichtung zum Setzen einer Markierung von vorbestimmten Referenzpunkten (M, N) in einem zweidimensionalen Bezugssystem auf eine im Wesentlichen ebene Wand (100) eines Lagertanks (1) mit einem Körner im Hinblick darauf, Einrichtungsmittel (107, 108) für Wärmeisolationsplatten (106) des Tanks vorzubereiten, die dazu bestimmt sind, auf die Wand geklebt zu werden, umfassend ein Werkzeug (10) zur Positionierung eines Körners, der auf der Wand verstellt und unbeweglich gemacht werden kann, wobei das Werkzeug zur Körnerpositionierung gemäß einem der vorhergehenden Ansprüche ist, umfassend außerdem eine Gesamtheit optischer Sender-Empfänger, die ausgelegt ist, um eine Steuerung der Position des Werkzeugs (10) bezüglich eines der vorbestimmten Referenzpunkte zu erlauben, wobei die Gesamtheit optischer Sender-Empfänger ein elektronischer Tachymeter (20) ist.

10. Vorrichtung zum Setzen einer Markierung mit einem Körner gemäß Anspruch 9, **dadurch gekennzeichnet, dass** die Station des Tachymeters (20) durch eine Basis (21) realisiert wird, die auf der Wand (100) fixiert ist, wobei der Tachymeter mit einem autonomen System (20A) zur Registrierung der Setzkoordinaten (xM, yM, zM) ausgestattet ist.

11. Setzvorrichtung gemäß einem der Ansprüche 9 und 10, **dadurch gekennzeichnet, dass** sie wenigstens einen zusätzlichen optischen Reflektor (6) umfasst, der geeignet ist, auf einen Träger (5) montiert zu werden, wobei der Träger ausgelegt ist, um auf der Wand (100) in wenigstens einem Kalibrierungspunkt (C) positioniert werden zu können, um eine eventuelle zeitliche Entwicklung der Position (xC, yC, zC) des vom Tachymeter gemessenen Kalibrierungspunkts zu steuern.

12. Setzvorrichtung gemäß Anspruch 11, **dadurch gekennzeichnet, dass** sie einen einzigen zusätzlichen optischen Reflektor (6) umfasst, dessen Träger (5) ausgelegt ist, um nacheinander in mehreren Kalibrierungspunkten auf der Wand positioniert zu werden.

13. Verwendung der Setzvorrichtung gemäß einem der Ansprüche 9 bis 12 zur Markierung von vorbestimmten Referenzpunkten (M, N) in einem zweidimensionalen Bezugssystem auf einer im Wesentlichen ebenen Wand (100) eines Lagertanks (1) mit dem Körner im Hinblick darauf, Einrichtungsmittel (107, 108) für Wärmeisolationsplatten (106) des Tanks vorzubereiten, die dazu bestimmt sind, auf die Wand geklebt zu werden.

14. Verwendung gemäß Anspruch 13, **dadurch gekennzeichnet, dass** das Werkzeug (10) von einem Bediener verstellt wird, um den Reflektor (12) des Werkzeugs im Wesentlichen oberhalb eines vorab markierten, eine ungefähre zu setzende Referenzposition festlegenden Punkts (P1, P2) zu positionieren,
wobei der Hauptträger (10A) des Werkzeugs (10) fest auf der Wand (100) unbeweglich gemacht ist, wobei der Bediener die Feinpositionseinstellung des angefügten Trägers (10B) bezüglich des Hauptträgers (10A) verwendet, um den Reflektor (12) des Werkzeugs der zu setzenden Referenzposition anzunähern, bis die Messung am Tachymeter der Position des Reflektors (12) des Werkzeugs einen Abstand kleiner als eine gegebene Toleranz ergibt,
ist der Abstand einmal kleiner als die gegebene Toleranz, wird der angefügte Träger (10B) des Werkzeugs (10) fest auf dem Hauptträger (10A) unbeweglich gemacht.

15. Verwendung gemäß Anspruch 14, **dadurch gekennzeichnet, dass** der optische Reflektor (12) und die Körnerführung (11) auf einem in Verschiebung bezüglich des angefügten Trägers (10B) verstellbaren Block (15) montiert sind,
nach der Verschiebung des Blocks (15) bezüglich des auf dem Hauptträger (10A) unbeweglich gemachten, angefügten Trägers (10B) wird die Körnerführung (11) genau bei der vorherigen Stelle des Reflektors (12) des Werkzeugs positioniert,
der Block (15) wird anschließend fest bezüglich des angehängten Trägers (10B) unbeweglich gemacht, was dem Bediener des Werkzeugs (10) erlaubt, einen Körner in die Führung (11) einzuführen und den Körner am bis auf einen Toleranzwert genauen Ort des zu setzenden Referenzpunkts auf die Wand zu stoßen.
